# EUROPEAN PATENT SPECIFICATION

(11) **EP 1 250 543 B1**
(45) Date of publication and mention of the grant of the patent: **30.03.2005**
(21) Application number: 01904641.6
(22) Date of filing: 09.01.2001
(51) Int. Cl.: F16H 15/42

(54) **TORQUE SENSOR**
DREHMOMENTSENSOR
CAPTEUR DE COUPLE

(30) Priority: 24.01.2000 NL 1014153
(43) Date of publication of application: 23.10.2002
(73) Proprietor: Hamapro Holding B.V., 8084 GW 't Harde (NL)
(72) Inventor: HOOGENBERG, Heerke, NL-7463 BH Rijssen (NL)
(74) Representative: 't Jong, Bastiaan Jacob
(86) International application number: PCT/NL2001/000009
(87) International publication number: WO 2001/053720

(56) References cited:
- EP-B- 0 688 407
- DE-C- 812 618
- FR-A- 608 487
- US-A- 1 903 228
- US-A- 2 132 801
- US-A- 2 325 323
- US-A- 2 336 799
- US-A- 2 478 289
- US-A- 5 267 920

## Description

The invention relates to a mechanical transmission, such as described in US-A-1 903 228 or US-A-2 325 323 which constitutes the closest prior art for claim 1.

In transmissions wherein a torque is transmitted via a friction surface, it is required that sufficient pressing force be applied to the friction surface, since otherwise slippage will occur, thereby limiting the torque to be transmitted. If the torque varies, the same pressing force is then not constantly necessary. If a fixed pressing force is chosen, it must always be so great that the maximum torque can be transmitted. Due to this great pressing force the bearings of the transmission will be unnecessarily loaded in the case of partial load.

This problem occurs particularly in continuously variable transmissions. In such transmissions a driving torque is transmitted by friction to an opposite surface serving as friction surface. Depending on the demanded torque, a determined pressing force must be realized between the friction surfaces.

Devices are known for adjusting a certain pressing force which is subject to the torque, wherein the torque is measured and on the basis hereof a certain pressing force is then adjusted, for instance by means of hydraulics. These devices consume energy and are complicated and therefore expensive to manufacture and maintain.

It is an object of the invention to provide a mechanical transmission which obviates the drawbacks of known devices. This object is achieved according to the invention by a mechanical transmission according to the invention, comprising:
- a frame;
- a first and second friction device, which device comprises:

- a first shaft with a friction surface comprising at least a radial directional component;
- a second shaft which is placed parallel with at least an axial directional component to the first shaft;
- a friction member arranged with an axial screw thread on the second shaft for friction contact with the friction surface, which friction member is displaced axially in the case of rotation relative to the second shaft; and
- pressing means for urging the friction member in an axial direction, wherein the first shaft of the first friction device forms an input shaft, which input shaft is arranged rotatably on the frame; wherein the first shaft of the second friction device forms an output shaft, which output shaft is arranged rotatably on the frame parallel to the input shaft and wherein the second shaft of the first friction device and the second shaft of the second friction device are mutually coupled to form a rotatable body, which rotatable body is arranged for at least radial displacement on the frame;
- a first push belt arranged between the friction surface and the friction member of the first friction device;
- a second push belt arranged between the friction surface and the friction member of the second friction device;
wherein the friction surfaces are rotation-symmetrical, the friction surfaces comprise at least an axial component and comprise at least a radial directional component.

When the first shaft is rotated with a certain torque, the first shaft will rotate relative to the friction member due to the screw thread. The friction member will hereby displace axially and press against the friction surface. When the pressing force is large enough to transmit the torque onto the second shaft, the rotation of the first shaft relative to the friction member will stop and the torque is transmitted from the first shaft onto the second shaft. The pressing means are arranged to ensure the first contact between the friction member and the friction surface.

The screw thread also provides a good radial centering of both shafts, whereby the bearing can remain relatively simple.

In a preferred embodiment roller bodies are arranged in the screw thread. These roller bodies considerably reduce the friction in the screw thread, whereby the pressing force is adjusted more precisely.

In another embodiment according to the invention the pressing means comprise a cup spring.

In a preferred embodiment according to the invention, one of the two shafts is axially displaceable and bounding means are arranged which engage on the friction member in order to limit the axial displacement of the friction member.

The ability to displace one of the two shafts makes it possible to also provide a clutch function in the transmission.

It is particularly desirable in the case of such a mechanical transmission to have a sufficiently great pressing force. On the other hand, this pressing force must not be too great, whereby unnecessary wear could occur.

In a preferred embodiment of the transmission according to the invention the pressing means of the first device and of the second device are shared.

In another embodiment of the transmission according to the invention at least one of the input shaft and the output shaft is axially displaceable and bounding means are arranged in order to bound the axial displacement of the friction member associated with the axially displaceable shaft.

A mechanical transmission with built-in clutch is formed using the above measures. Because the friction member is bounded in its axial displacement, a larger axial displacement of one of the shafts enables one of the two friction surfaces to be disengaged from the friction member. It is hereby possible to disengage the input shaft from the output shaft.

In a preferred embodiment according to the invention the friction surface arranged on the displaceable shaft comprises a first engaging surface.

When the mechanical transmission is also used as clutch, the friction surface arranged on the displaceable shaft will then wear excessively in that when the input shaft and the output shaft engage the push belt will slip over the friction surface. The operation of the mechanical transmission will be affected because the friction surface wears excessively. By now providing a special engaging surface only this surface will wear and the friction surface required for the mechanical transmission will remain intact.

In a further preferred embodiment according to the invention a second engaging surface is arranged on the push belt which engages on the friction surface associated with the displaceable shaft, wherein the first engaging surface lies outside the plane of the friction surface such that only the first engaging surface can co-act with the second engaging surface.

Owing to the slippage occurring between the push belt and the friction surface during engaging of the clutch, the push belt will also wear. By now providing on the push belt a special second engaging surface which can only co-act with a first engaging surface, wear to either the push belt or the friction surface will not affect the operation of the mechanical transmission.

These and other features of the invention will be further elucidated with reference to the annexed drawings:
figure 1 shows a cross-section of a device according to the invention;
figure 2 shows a first embodiment of a mechanical transmission according to the invention;
figures 3a and 3b shows cross-sections of a second embodiment of a mechanical transmission according to the invention; and
figure 4 shows a third embodiment of a mechanical transmission in which a device according to the invention is arranged.

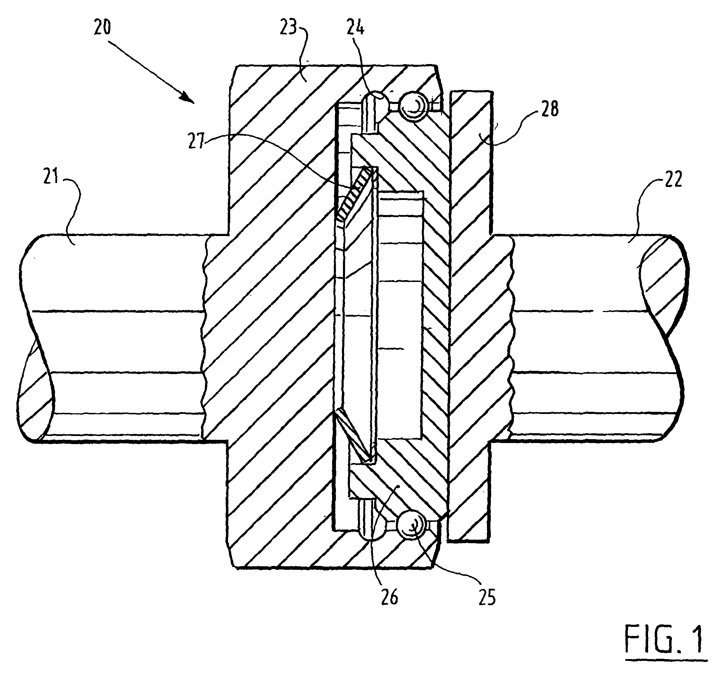

Figure 1 shows a device 20 according to the invention. Such devices 20 are usually designated as torque sensor. The device 20 has an input shaft 21 and an output shaft 22. Provided on input shaft 21 is a part 23 which has an internal screw thread 24. Arranged in this screw thread 24 are balls 25 which form a bearing for friction member 26. Friction member 26 is pressed against a friction surface 28 of output shaft 22 by means of cup springs 27.

When input shaft 21 is driven, it will carry along the friction member 26. Since friction member 26 is pressed against friction surface 28 of the stationary output shaft by cup springs 27, friction member 26 is held back in the first instance, whereby it will displace axially as a result of the screw thread. When the pressing force is sufficiently great, this axial displacement will stop and output shaft 22 will be carried along.

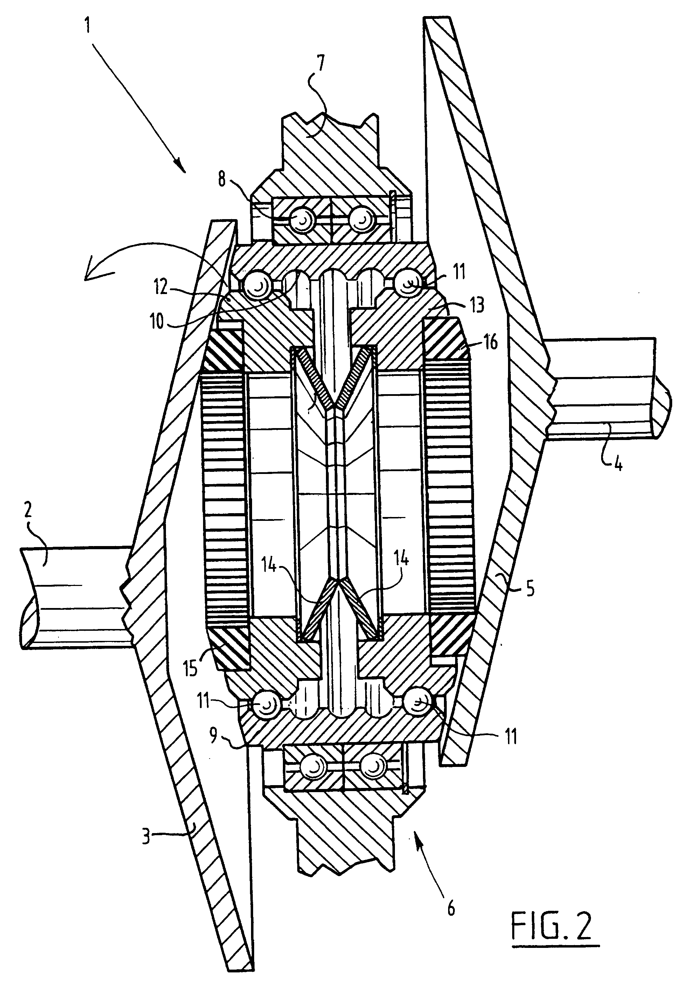

Figure 2 shows a mechanical transmission 1 which comprises an input shaft 2 having thereon a friction surface 3, an output shaft 4 and a friction surface 5 arranged thereon. Between friction surfaces 3 and 5 is arranged a displaceable friction member 6 with which the transmission ratio between input shaft 2 and output shaft 4 can be adjusted.

Friction member 6 comprises a frame 7 which is displaceable. A bush 9 is mounted in this frame 7 via bearings 8. Bush 9 is provided on the inner side with a screw thread 10. Two bodies 12 and 13 are arranged in this screw thread by means of balls 11. Arranged between bodies 12 and 13 are cup springs 14 which urge the two bodies away from each other. Bodies 12 and 13 are provided on the sides directed toward the respective friction surfaces 3 and 5 with a push belt 15 respectively 16.

Cup springs 14 ensure that push belts 15, 16 are brought into contact with the respective friction surfaces 3 and 5. If a torque is now applied to shaft 2, the push belt 15, and therefore body 2, will be carried along by rotation of friction surface 3. Owing to the screw thread 10 the body 12 will now displace relative to bush 9 in the direction of friction surface 3. This will result in a certain pressing force of push belt 15 on friction surface 3. When the pressing force is sufficiently great, the bush 9 will be carried along by rotation of shaft 2.

In this mechanical transmission two pressing devices according to figure 1 are in fact arranged, each ensuring the correct pressing force of one of the push belts.

Since in the first instance the output shaft 4 stands still, the body 13 will be held back due to friction between push belt 16 and friction surface 5. Because bush 9 rotates, the body 13 will now displace relative to this bush toward friction surface 5, so that the pressing force between push belt 16 and friction surface 5 increases. As soon as the pressing force is sufficiently great, output shaft 4 will begin to rotate and a torque of input shaft 2 can thus be transmitted onto output shaft 4.

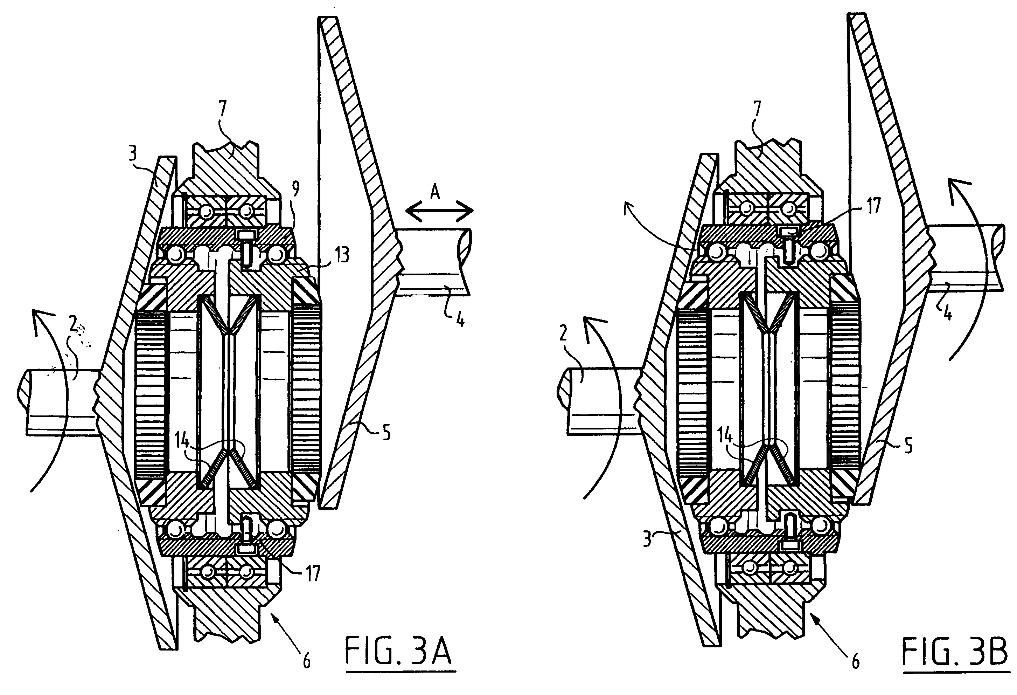

Figures 3a and 3b show a variant of the device according to figure 2. Corresponding components are designated with the same reference numerals and for the sake of simplicity will not be further described here.

The difference from the embodiment of figure 2 is that output shaft 4 is displaceable in the axial direction A. In bush 9 is arranged a securing member 17 which prevents the body 13 running out of the screw thread as a consequence of the cup springs 14 when output shaft 4 is moved away from friction member 6. Figure 3a shows the disengaged position.

In figure 3b the output shaft 4 is once again placed against friction member 6, whereby body 13 is released from the securing member 17 and the mechanical transmission operates as shown in figure 2.

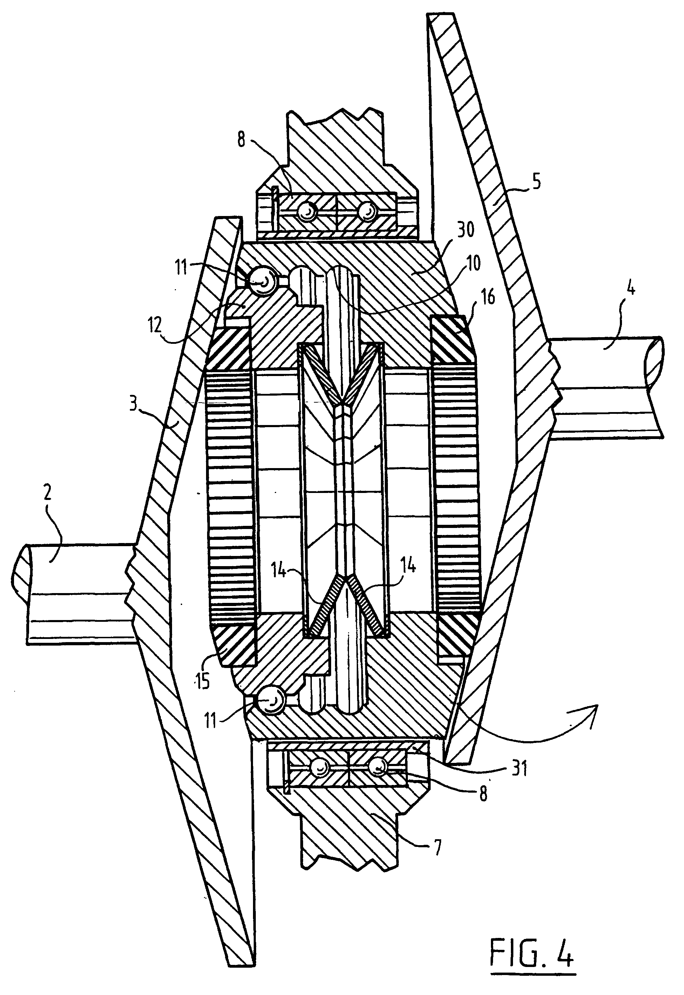

Figure 4 shows a mechanical transmission which in construction largely corresponds with the embodiment shown in figure 2. Corresponding components are therefore designated with the same reference numerals.

In this embodiment the push belt 15 is also arranged in a body 12. Push belt 16 is arranged in a body 30. Body 12 is mounted in body 30 via roller bodies 11 and screw thread 10.

Placed coaxially on body 30 is a bush 31 which is axially displaceable relative to this body 30. This bush is mounted in frame 7 by means of bearings 8.

The operation corresponds for the most part with the operation of the embodiment of figure 2. The rotation of body 12 relative to body 30 ensures that the distance between the two push belts 15, 16 changes. In order to distribute the axial pressing force evenly over the two friction surfaces 3, 5, the body 30 will displace axially in bush 31.

The advantage of this construction is that the bearings 8 are not axially loaded and the frame therefore also remains unloaded in axial direction.

## Claims

1. Mechanical transmission, comprising:
- a frame (7);
- a first and second friction device, which devices comprise:
a first shaft (2, 4) with a friction surface (3, 5) comprising at least a radial directional component;
a second shaft (9) which is placed parallel with at least an axial directional component to the first shaft (2, 4);
a friction member (12, 13) arranged on the second shaft (9) for friction contact with the friction surface (3, 5),
wherein the first shaft (2) of the first friction device forms an input shaft (2), which input shaft (2) is arranged rotatably on the frame (7); wherein the first shaft (4) of the second friction device forms an output shaft (4), which output shaft (4) is arranged rotatably on the frame (7) parallel to the input shaft (2) and wherein the second shaft (9) of the first friction device and the second shaft (9) of the second friction device are mutually coupled to form a rotatable body, which rotatable body is arranged for at least radial displacement on the frame (7);
**characterised by** that the first (12) and second friction member (13) are arranged with an axial screw thread (24) and are displaced axially in case of rotation relative to the second shaft (9) and the first and second friction device comprise means (14) for urging the friction member (12, 13) in axial direction;
- a first push belt (15) arranged between the friction surface and the friction member (12) of the first friction device;
- a second push belt (16) arranged between the friction surface and the friction member (13) of the second friction device;
wherein the friction surfaces (3, 5) are rotation-symmetrical, the friction surfaces (3, 5) comprise at least an axial component and comprise at least a radial directional component.

2. Transmission as claimed in claim 1, wherein the pressing means (14) of the first device and of the second device are shared.

3. Transmission as claimed in claim 1, wherein at least one of the input shaft (2) and the output shaft (4) is axially displaceable and wherein bounding means are arranged in order to bound the axial displacement of the friction member (12, 13) associated with the axially displaceable shaft (2, 4).

4. Transmission as claimed in claim 3, wherein the friction surface arranged on the displaceable shaft (2, 4) comprises a first engaging surface.

5. Transmission as claimed in claim 4, wherein a second engaging surface is arranged on the push belt (15, 16) which engages on the friction surface associated with the displaceable shaft (2, 4), wherein the first engaging surface lies outside the plane of the friction surface such that only the first engaging surface can co-act with the second engaging surface.

## Patentansprüche

1. Mechanisches Getriebe, aufweisend:
- einen Rahmen (7);
- eine erste und zweite Reibvorrichtung, welche Vorrichtungen aufweisen:
eine erste Welle (2, 4) mit einer Reibfläche (3, 5), aufweisend wenigstens eine Radialrichtungskomponente;
eine zweite Welle (9), welche parallel zu wenigstens einer Axialrichtungskomponente an der ersten Welle (2, 4) platziert ist;
ein Reibelement (12, 13), das an der zweiten Welle (9) für einen Reibkontakt mit der Reibfläche (3, 5) angeordnet ist,
wobei die erste Welle (2) der ersten Reibvorrichtung eine Antriebswelle (2) bildet, welche Antriebswelle (2) an dem Rahmen (7) drehbar angeordnet ist, wobei die erste Welle (4) der zweiten Reibvorrichtung eine Abtriebswelle (4) bildet, welche Abtriebswelle (4) an dem Rahmen (7) parallel zu der Antriebswelle (2) drehbar angeordnet ist, und wobei die zweite Welle (9) der ersten Reibvorrichtung und die zweite Welle (9) der zweiten Reibvorrichtung gemeinsam gekuppelt sind, um einen drehbaren Körper zu bilden, welcher drehbare Körper für wenigstens eine radiale Verschiebung an dem Rahmen (7) angeordnet ist;
**dadurch gekennzeichnet, dass**
das erste (12) und das zweite Reibelement (13) mit einem axialen Schraubengewinde (24) angeordnet sind und im Falle der Drehung relativ zu der zweiten Welle (9) axial verschoben werden und die erste und zweite Reibvorrichtung Mittel (14) zum Drücken der Reibelemente (12, 13) in Axialrichtung aufweisen;
- ein erster Schubriemen (15) zwischen der Reibfläche und dem Reibelement (12) der ersten Reibvorrichtung angeordnet ist;
- ein zweiter Schubriemen (16) zwischen der Reibfläche und dem Reibelement (13) der zweiten Reibvorrichtung angeordnet ist;
wobei die Reibflächen (3, 5) rotationssymmetrisch sind, die Reibflächen (3, 5) wenigstens eine axiale Komponente aufweisen und wenigstens eine Radialrichtungskomponente aufweisen.

2. Getriebe nach Anspruch 1, wobei die Druckmittel (14) der ersten Vorrichtung und der zweiten Vorrichtung gemeinsam benutzt werden.

3. Getriebe nach Anspruch 1, wobei wenigstens eine von der Antriebswelle (2) und der Abtriebswelle (4) axial verschiebbar ist, und wobei Begrenzungsmittel angeordnet sind, um die axiale Verschiebung des Reibelements (12, 13) zu begrenzen, das der axial verschiebbaren Welle (2, 4) zugeordnet ist.

4. Getriebe nach Anspruch 3, wobei die Reibfläche, die an der verschiebbaren Welle (2, 4) angeordnet ist, eine erste Eingriffsfläche aufweist.

5. Getriebe nach Anspruch 4, wobei eine zweite Eingriffsfläche an dem Schubriemen (15, 16) angeordnet ist, welche in die Reibfläche eingreift, die der verschiebbaren Welle (2, 4) zugeordnet ist, wobei die erste Eingriffsfläche außerhalb der Ebene der Reibfläche liegt, so dass nur die erste Eingriffsfläche mit der zweiten Eingriffsfläche zusammenwirken kann.

## Revendications

1. Transmission mécanique, comprenant :
- un cadre (7) ;
- des premier et deuxième dispositifs de frottement, lesquels dispositifs comprennent :
un premier arbre (2, 4) comportant une surface de frottement (3, 5) comprenant au moins une composante directionnelle radiale ;
un deuxième arbre (9) placé parallèlement avec au moins une composante directionnelle axiale au premier arbre (2, 4) ;
un élément de frottement (12, 13) agencé sur le deuxième arbre (9) pour un contact par frottement avec la surface de frottement (3, 5),
dans laquelle le premier arbre (2) du premier dispositif de frottement forme un arbre d'entrée (2), lequel arbre d'entrée (2) est agencé en rotation sur le cadre (7), dans laquelle le premier arbre (4) du deuxième dispositif de frottement forme un arbre de sortie (4), lequel arbre de sortie (4) est agencé en rotation sur le cadre (7) parallèlement à l'arbre d'entrée (2), et dans laquelle le deuxième arbre (9) du premier dispositif de frottement et le deuxième arbre (9) du deuxième dispositif de frottement sont accouplés mutuellement pour former un corps rotatif, lequel corps rotatif est agencé pour effectuer au moins un déplacement radial sur le cadre (7) ;
**caractérisée en ce que** les premier (12) et deuxième (13) éléments de frottement comportent un filetage axial (24) et sont déplacés axialement dans le cas d'une rotation par rapport au deuxième arbre (9) et les premier et deuxième dispositifs de frottement comprennent des moyens (14) pour pousser l'élément de frottement (12, 13) dans une direction axiale ;
- une première courroie de poussée (15) agencée entre la surface de frottement et l'élément de frottement (12) du premier dispositif de frottement ;
- une deuxième courroie de poussée (16) agencée entre la surface de frottement et l'élément de frottement (13) du deuxième dispositif de frottement ;
dans laquelle les surfaces de frottement (3, 5) présentent une symétrie de rotation, les surfaces de frottement (3, 5) comprennent au moins une composante axiale et comprennent au moins une composante directionnelle radiale.

2. Transmission selon la revendication 1, dans laquelle les moyens de pression (14) du premier dispositif et du deuxième dispositif sont partagés.

3. Transmission selon la revendication 1, dans laquelle au moins l'un de l'arbre d'entrée (2) et de l'arbre de sortie (4) peut être déplacé axialement, et dans laquelle des moyens de limitation sont agencés afin de limiter le déplacement axial de l'élément de frottement (12, 13) associé à l'arbre pouvant être déplacé axialement (2, 4).

4. Transmission selon la revendication 3, dans laquelle la surface de frottement agencée sur l'arbre pouvant être déplacé (2, 4) comprend une première surface de mise en prise.

5. Transmission selon la revendication 4, dans laquelle une deuxième surface de mise en prise est agencée sur la courroie de poussée (15, 16) qui vient en prise sur la surface de frottement associée à l'arbre pouvant être déplacé (2, 4), dans laquelle la première surface de mise en prise se trouve à l'extérieur du plan de la surface de frottement de sorte que seule la première surface de mise en prise puisse agir conjointement avec la deuxième surface de mise en prise.
